# EUROPEAN PATENT APPLICATION

(11) **EP 4 704 374 A1**
(43) Date of publication of application: **04.03.2026**
(21) Application number: 24197904.6
(22) Date of filing: 02.09.2024
(51) Int. Cl.: H04L 9/32

(54) **A SECURE ELEMENT OF A TRANSACTION SYSTEM**

(71) Applicant: Giesecke+Devrient advance52 GmbH, 81677 München (DE)
(72) Inventor: Gibis, Oliver, 81677 München (DE)
(74) Representative: Giesecke+Devrient IP

(57) **Abstract**

The present invention is related to a secure element (1) of a transaction system comprising multiple transaction partners, the secure element (1) comprising:
- a communication unit (56) configured for receiving at least one certificate from a current transaction partner;
- a certificate verification unit (53) configured to verify the at least one received certificate (12-2, 13-2, 14-2) and to provide a verified data element (15-2), wherein the verification unit (53) uses verification data (11, 20) stored in a non-volatile memory (54) of the secure element (1);
- a transaction unit (52) using the verified data element (15-2) provided by the certificate verification unit (53) in a current transaction of the transaction system.

In the present secure element the verification data (11, 20) stored in the non-volatile memory (54) comprise dynamic verification data (20);
the dynamic verification data (20) comprise at least two records (22a-22c) of previous transactions of the secure element (1) in the transaction system; and
the records (22a-22c) in the dynamic verification data (20) stored in the non-volatile memory (54) respectively comprise a certificate reference (H-2, H-5) of at least one previous certificate received and verified in a previous transaction.

## Description

The invention relates to a secure element of a transaction system, in which certificates are used in transactions, and to a corresponding transaction system.

Certificates are widely used in transaction systems, even if the transaction system comprises secure elements involved in the transactions.

Typically, the secure element includes a public key of a key pair, wherein a certificate for the public key, the certificate being issued by a certification unit, is added to the secure element. The certificate may comprise multiple certificate fields, for example including the certified public key, a name of the certification unit, a signature of the certification unit, a version of the cryptographic algorithm and the public key of the certification unit. In a transaction a certificate is verified before the certified data element, e.g. public key, is used, e.g. for authenticating the secure element.

Certificate chains require verification of multiple certificates before the certified data element may be used. For example, a trusted root public key is known in the system and the certificate for the public key of the participant can be verified via an intermediate certificate, wherein the public key of the intermediate certificate can be verified with the root public key.

In WO 2023/011759 A1 a certificate for a public key of the secure element and the option to provide certificates for other data elements, such as a group assignment, are discussed. EP 2136528 B1 discloses a secure element comprising a certificate chain for a public key of the secure element, wherein a further certificate for a derived public key is created in a server and received in another secure element.

According to an object of the invention a secure element of a transaction system shall be provided which improves security, preferably with remaining or increased transaction reliability and/or with remaining or decreased transaction time.

The above-identified objectives are solved by the subject matter of the independent claims. Further advantageous embodiments are described in the dependent claims.

According to an aspect of the present invention, there is provided a secure element of a transaction system comprising multiple transaction partners, preferably multiple further secure elements. The secure element comprising:
- a communication unit configured for receiving at least one certificate from a current transaction partner;
- a certificate verification unit configured to verify the at least one received certificate and to provide a verified data element, wherein the verification unit uses verification data stored in a non-volatile memory of the secure element;
- a transaction unit using the verified data element provided by the certificate verification unit in a current transaction of the transaction system.

The present verification data stored in the non-volatile memory comprise dynamic verification data. The dynamic verification data comprise at least two records of previous transactions of the secure element in the transaction system; and the records in the dynamic verification data stored in the non-volatile memory respectively comprise a certificate reference of at least one previous certificate received and verified in a previous transaction.

Accordingly, as an indirect combined effect a high security level can be provided for the secure element(s) despite their resource limitations, in particular in terms of data storage and data transmission. The solution enables the use of longer certificate chains and/or a more complex certification scheme, particularly without (significantly or at all) increasing the average transaction time in the transaction system and/or without proportionally requiring more (or requiring even less) resources on the secure element.

The at least one current certificate from a current transaction partner and/or the at least one previous certificate may comprise a transaction partner (secure element) certificate and/or a first intermediate level certificate and/or or a second intermediate level certificate. A certificate chain comprises the transaction partner certificate and one or more intermediate level certificates. Preferably a second intermediate level certificate and a first intermediate level certificate are used. Basically, the transaction partner certificate thus would be a third level certificate.

The certified/verified data element, may be a public key, particularly an authentication public key and/or a signing public key and/or an encryption public key, an identifier, such as a participant identifier, a secure element identifier or a wallet identifier, preferably being unique in the transaction system. In the transaction system different certification schemes may be used for different data elements.

The certificate verification unit is preferably configured to check, if the certificate reference of at least one certificate from a current transaction corresponds to a certificate reference from a previous transaction stored in the dynamic verification data. Thus at least some verifications can be selectively avoided.

For example, in case the certificate reference of a transaction partner certificate or of a certificate chain is (still) stored in the dynamic verification data, the verification unit may provide the verified data element without reverification. In case the certificate reference is not stored in the dynamic reference data, the verification unit may provide the verified data element after verification of at least the transaction partner certificate and preferably stores the certificate reference in the dynamic verification data. Intermediate certificates of the certificate chain may be verified, particularly if even their certificate reference is not stored in the dynamic verification data.

For example, in case the certificate reference of an (first, second and/or third) intermediate level certificate is (still) stored in the dynamic verification data, the verification unit may use the certified data element of the intermediate level certificate without reverification. The certified data element of the intermediate level certificate typically is a public certificate verification key (for verifying the participant certificate or the next intermediate level certificate). In case the certificate reference of the intermediate level certificate(s) is not stored in the dynamic reference data, the verification unit may verify (at least) the intermediate level certificate, before using the certified data element thereof in further steps of certificate verification.

A length of a certificate chain and a number of certification authorities per level may affect the security in the transaction system. In particular for secure elements, for which certificate revocation generally is a slow and/or complex process, security can be improved by longer certificate chains and/or more certification authorities per level. This advantage appears to be contradictory but e.g. comes from the reduced number of secure elements affected per revocation.

A length of a certificate chain can be indicated by the number of intermediate levels (preferably one or two). For example, assuming one intermediate level, the participant certificate is certified by the intermediate level (e.g. participant certificate issued by intermediate level authority/ intermediate level certificate issuing unit), the intermediate level being certified by a trusted root (e.g. intermediate level certificate issued by root authority/root certificate issuing unit). Assuming two intermediate levels, the participant certificate would be certified by the second intermediate level (e.g. participant certificate issued by second intermediate level authority/second intermediate level certificate issuing unit), a second intermediate level being certified by the first intermediate level (e.g. second intermediate level certificate issued by first intermediate level authority/ first intermediate level certificate issuing unit) and the first intermediate level being certified by the trusted root (e.g. first intermediate level certificate issued by root authority/ root certificate issuing unit).

A number of certification authorities/intermediate level certificates in the (preferably first or second) intermediate level of the transaction system can be two or more, preferably three or more. In particular the transaction system comprises two or more, preferably three or more, first intermediate level certification authorities (and preferably at most five, more preferably at most four, hence two to four or three to four first intermediate level certification authorities). In particular the transaction system comprises five or more, preferably eight or more, second intermediate level certification authorities (and preferably at most twenty-five, more preferably at most twenty, hence e.g. eight to twenty-five or eight to twenty second intermediate level certification authorities).

In particular when compared to the known static verification data approach, the present approach of dynamic verification data quickly becomes more advantageous with increasing length of the certificate chain and/or more certification authorities per level. Thus the solution is preferred for two (or more) intermediate levels and/or five or more certification authorities in one of the intermediate levels.

A certification key pair comprises a secret certification key and a public certification (or verification) key. A secret certification key may be used by the certificate issuing unit for creating (the signature of) a certificate. A public certification (or verification) key may be used for verifying a certificate. Root or intermediate level certificates typically certify a public certification (or verification) key of the next level in the certificate chain.

As already indicated, the certificate reference may refer to one or more certificates. It may be for example the certificate reference of a transaction partner (secure element) certificate and/or a first intermediate level certificate and/or or a second intermediate level certificate.

The certificate reference preferably is a derived certificate reference, such as a hash value or a checksum, of the at least one current certificate (the current participant certificate or the current intermediate level certificate or the current certificate chain).

At least the average transaction time can be improved, if the current certificate (chain) is not always received. Hence, preferably only a current certificate reference is received from a current transaction partner, particularly prior to or instead of receiving the at least one current certificate from the current transaction partner. The size of the certificate reference is smaller than 20% of a certificate size such that the data to be transmitted in an average transaction is reduced. In preferred variants multiple current certificate references are received from a current transaction partner in a current transaction partner. Preferably a current transaction partner certificate reference for the current transaction partner certificate (or certificate chain) is received and a (first and/or second) intermediate level certificate reference is received.

As indicated already the records of the dynamic verification data preferably comprise derived and/or selected data elements of the certificate (but do not comprise a complete certificate). Hence, the data stored in the secure element and/or the data received (and/ or sent) by the secure element is reduced.

A record size of the records in the dynamic verification data is typically smaller than 60%, preferably smaller than 50%, more preferably smaller than 33% of a certificate size of the (one) previous certificate.

A reference size of the certificate reference is typically smaller than 50%, preferably smaller than 33%, of a data element size of the verified data element.

Typically, the at least one received certificate includes a transaction partner certificate of the transaction partner for the verified data element and preferably one or more intermediate certificates. The at least one previous certificate typically is a previous transaction partner certificate or a previous intermediate level certificate, preferably a previous first level intermediate certificate or a previous second level intermediate certificate.

The record(s) in the dynamic verification data may comprise the verified data element of the previous transaction. Reception of the current certificate (chain) thus can be avoided in a current transaction, since only the certificate reference of the current certificate (chain) would be required. Alternatively however to storing the verified data element, the certificate may be received. In the preferred variants the verified data element is stored in the record in addition to the certificate reference. In another variant the verified data element forms the certificate reference.

The records in the dynamic verification data may respectively comprise a record usage counter, preferably as a relative usage counter. The usage counter of a record could be e.g. increased each time the current certificate reference corresponds to the certificate reference of the record. A relative usage can be evaluated e.g. by decreasing all usage counters regularly (e.g. by one upon each 16th or 32nd transaction). Alternatively a bit array (of e.g. 16 or 32 bits) may be used for each record, wherein bit=1 indicates used an bit=0 indicates unused. The relative usage within the last (e.g. 16 or 32) transactions corresponds to the number of bits set in the bit array. The bits would be used in cyclic manner (first transaction bit-1, ... 32nd transaction= bit-32, 33rd transaction = bit-1 ...). The usage counter may be used to identify a most unused record in the records (or group of records) of the dynamic verification data.

In addition or alternatively the records in the dynamic verification data may respectively comprise a record expiration date. The expiration date of the record typically corresponds to an expiration date of the (transaction partner/intermediate level) certificate.

The certificate verification unit preferably is configured to store at least the current certificate reference of the certificate of the verified data element (and optionally the verified data element and/or the above further record elements) into a record of the dynamic verification data. Of course, this step is performed in case the certificate reference was not stored already. The certificate reference (and further record elements) are preferably stored into an empty record of the dynamic verification data. In case no empty record is available a most unused record of the records (in the dynamic verification data or for a given certificate level) is used.

In preferred variants the dynamic verification data comprises two or more verification data record areas each being assigned to a given certificate level. In alternative variants the records in the dynamic verification data further comprise a certificate level indicator. In both variants the number of records for a certificate level may be limited to a predetermined number for the certificate level. The certificate level is a level of the certificate in a certificate chain and/or indicates one of the following: transaction partner certificate, second level intermediate certificate or first level intermediate certificate. Accordingly, the dynamic verification data could comprise two or three verification data record areas of the following: a transaction partner certificate area, a (second level) intermediate certificate area and a first level intermediate certificate area. A number of records in the dynamic verification data may be between 4 and 30, preferably between 5 and 25. A predetermined number of records for transaction partner certificates may be between 4 and 20. A predetermined number of records for second intermediate level certificates may be between 2 and 8. A predetermined number of records for a first intermediate certificate level may be between 2 and 4. Preferably, the number of records in the dynamic verification data and/or its record areas is configured upon personalization/production of the secure element.

The verification data typically also comprises static verification data. The static verification data may comprise one or more static certificates, which may optionally be verified by the certificate verification unit, and/or may comprise trusted public keys. Trusted public keys stored in the static verification data are assumed to be trusted.

The static verification data may comprise static root verification data, preferably at least a first root certificate and/or a first root public key. The static root verification data form a trusted root for any certificate or certificate chain of the transaction system verified in the secure element. Since the static root verification data are common to multiple secure elements, particularly to the majority of secure elements of the transaction system (at least at one point of time); the may form common static root verification data for secure elements of the transaction system.

The static verification data may also comprise static (secure element and/or transaction application) issuer verification data, preferably at least an issuer certificate and/or an issuer public key. The static issuer verification data preferably are second intermediate level certificates or trusted issuer public keys of a second intermediate level. The static issuer verification data (or first static issuer verification data) may be for the secure element issuer/ static secure element issuer verification data. The static issuer verification data (or second static issuer verification data) may be for the transaction application issuer/ static transaction application issuer verification data. The static verification data may comprise system unit verification data, such as token register verification data or central service unit verification data.

The static verification data or at least the static root verification data typically will not change during the lifetime of the secure element. Basically, an expiration date of the static root verification data corresponds to the lifetime of the secure element (corresponds or defines the expiration date of the secure element). The static verification data is preferably stored in the secure element before issuance of the secure element to the user/owner of the secure element or is stored only once into the secure element (not changed, preferably unchangeable). Some static verification data however may be changed or updated in the issued secure element, e.g. by a remote static verification data management unit. For example, a security event in the transaction system may trigger an update of static verification data in secure elements of the transaction system. The static verification data however remain static/unchanged in transactions.

Different generations of static verification data in secure elements of the transaction system can be addressed as follows. The static verification data may comprise current generation static verification data, preferably current generation root verification data, current generation intermediate verification data or current generation system unit verification data, and future generation static verification data, preferably future generation root verification data, future generation intermediate verification data or future generation system unit verification data. The current generation static verification data will have a first expiration date and the future generation static verification data typically has a second expiration date which is more than 6 months or more than 12 months later.

In the transaction system secure elements - of the current generation - are issued, these secure elements, including the present secure element, use the current generation static (root) verification data. In the lifetime of the secure element/before the first expiration date, further secure elements will be issued, the further secure element using the future generation static (root) verification data. In order to allow transactions in the far future (more than 6 months or more than 12 months after issuance of the present secure element) with such further secure elements, the present secure element already stores future generation static verification data (or alternatively may receive an remote update for the static (root) verification data). Optionally, the secure element may include previous generation static verification data. Secure elements of the transaction system issued, e.g. months or a year, before the present secure element my use the previous generation static verification data. It should be noted that the majority of the secure elements of the transaction system at least a certain point of time will include the current generation static verification data. The secure elements of the transaction system preferably only include two generations of static verification data at a time.

The certificate verification unit should be configured to skip a certificate verification, if a record exists in the dynamic verification data and to perform a certificate verification, if no record exists. Hence, the current certificate (chain) of the transaction partner in the current transaction is verified or not depending on the existence of a record for the certificate reference in the dynamic verification data. As already indicated, (mutual) transmission of the certificate reference(s) is preferred, however alternatively the certificate(s) may be (mutually) transmitted.

In the preferred variants the verified data element is a cryptographic key, particularly a cryptographic public key (of key pair comprising a secret key and the public key). Preferably, the verified data element is an authentication public key used in an authentication phase of the transaction. The authentication phase in particular comprises mutual authentication of the transaction partners and/or secure channel establishment between the transaction partners. The verified data element could also be a unique identifier of the secure element or the transaction application.

The certificate(s) typically comprises (comprise) a certification signature and /or a certificate verification key and/or the verified data element.

The transaction preferably is a digital money transaction, particularly a CBDC transaction and/or a monetary value token transaction. The secure element preferably storing one or more monetary value tokens/CBDC tokens.

In token-based digital money systems typically a monetary value token is transferred between participants in the transaction. For example EP 3 671 514 B1, WO 2020/212331 A1, WO 2021/170646 A1, WO 2023/011758 A1 and WO 2023/011761 A1 disclose different aspects of such systems. In account based digital money systems in the digital money transaction the amount of money stored in an account (locally or remotely) is changed.

The secure element(s) may be a portable data carrier, such as a smart card, a secure USB token, a secure (SD) storage card, a secure RFID-token or a NFC-token. The (or the further) secure element(s) may be an embedded secure element, such as an embedded SIM element, an embedded TPM element or an embedded NFC element.

Secure elements are (normally) not adapted to directly communicate to each other. A terminal typically controls a communication session with at least one (or both) of the secure elements and sends commands to the one (or both) secure elements. The present secure element receives a command from a terminal and executes it, in addition it generates a command for the transaction partner and sends it to the terminal in the command response for the received command. The terminal forwards the generated command to the transaction partner/other secure element. The transaction partner/other secure element optionally receives the generated command via a second terminal.

According to another aspect of the present invention there is provided a transaction system comprising multiple secure elements as described above.

The transaction system may comprise two or more participant certificate issuing units issuing participant certificates. A participant certification key pair of the respective participant certificate issuing units comprises a secret participant certification key and a public participant certification key. An intermediate level certificate, preferably second or first intermediate level, certifies a public participant certification key or a public intermediate level certification key. The transaction system may comprise two or more, in particular first and/or second level, intermediate certificate issuing units issuing (first or second) intermediate level certificates. An intermediate level certification key pair of the respective intermediate level certificate issuing units comprises a secret intermediate level certification key and a public intermediate level certification key. An intermediate level certificate (of a lower level) or a root certificate certifies a public intermediate level certification key. The transaction system may comprise a root issuing unit issuing one or more intermediate level certificates. A root certification key pair of the respective root certificate issuing unit comprises a secret root certification key and a public root certification key.

The transaction system may also comprise transaction terminals (intermediary devices) and/or the secure elements may comprise a terminal interface unit/ device interface unit, such as a RFID/NFC/USB/ISO 7816 or BTLE interface.

The transaction system preferably is a digital money system, more preferably a monetary value token transaction system. Optionally the monetary value token transaction system further comprises a token register, preferably a token reference register, and/or one or more token issuer (server). Again, for example EP 3 671514 B1, WO 2020/212331 A1, WO 2021/170646 A1, WO 2023/011758 A1 and WO 2023/011761 A1 disclose different aspects of such systems.

The transaction system may comprise the following entity types: system operator entities, such as a digital money register, a digital money issuer server or issuer service units, service provisioning entities, such as financial service units, e.g. including secure element issuer services and/or exchange services, and participants, including secure elements and hosted participant entities (hosted wallets).

The present secure element approach/method may also be used in other system entities of the transaction system, particularly for hosted participant entities. The approach would be however primarily used for providing interoperability with the secure elements, particularly for interoperability of participants being hosted participants and the secure elements. Apparently, hosted participants or other system entities may easily reverify and/or request and/or receive (all) certificates or chains and/or may store full certificates as dynamic verification data and/or use central certificate services, such as certificate (chain) provisioning services or certificate revocation list services. Particularly for a communication with the secure element(s) of the transaction system, the hosted participants or other system entities may be adapted to act in accordance with the present approach/ method.

In the transaction system two or more of the following first intermediate level certificates may exist. A system operator first intermediate level certificate, wherein different units of the system operator may have different second intermediate level certificates. A service provider first intermediate level certificate, wherein different (financial) service providers may have different second intermediate level certificates. A secure element first intermediate level certificate (or a participant first intermediate level certificate), wherein different secure element issuers, different secure element sellers (or different participant hosts), may have different second intermediate level certificates respectively. A participant host first intermediate level certificate for participant hosts, hosting participant units of multiple users (hosted wallets), wherein different participant hosts, may have different second intermediate level certificates respectively.

In the following, the invention or further embodiments and advantages of the invention are explained in more detail based on drawings, wherein the drawings describe only some of the possible embodiments of the invention. At least elements drawn with dashed lines are considered to be optional elements.

The drawings are not to be regarded as true to scale, and individual elements of the drawings may be shown in exaggeratedly large or exaggeratedly simplified form.

### The Figures show

Fig. 1 - steps of a certificate verification in a secure element storing dynamic verification data in a first transaction with another secure element;
Fig. 2 - steps of a certificate verification in a secure element storing dynamic verification data in a second transaction with another secure element;
Fig. 3 - examples of records of dynamic verification data;
Fig. 4 - examples of data elements in a record of dynamic verification data; and
Fig. 5 - units of a secure element including dynamic verification data.

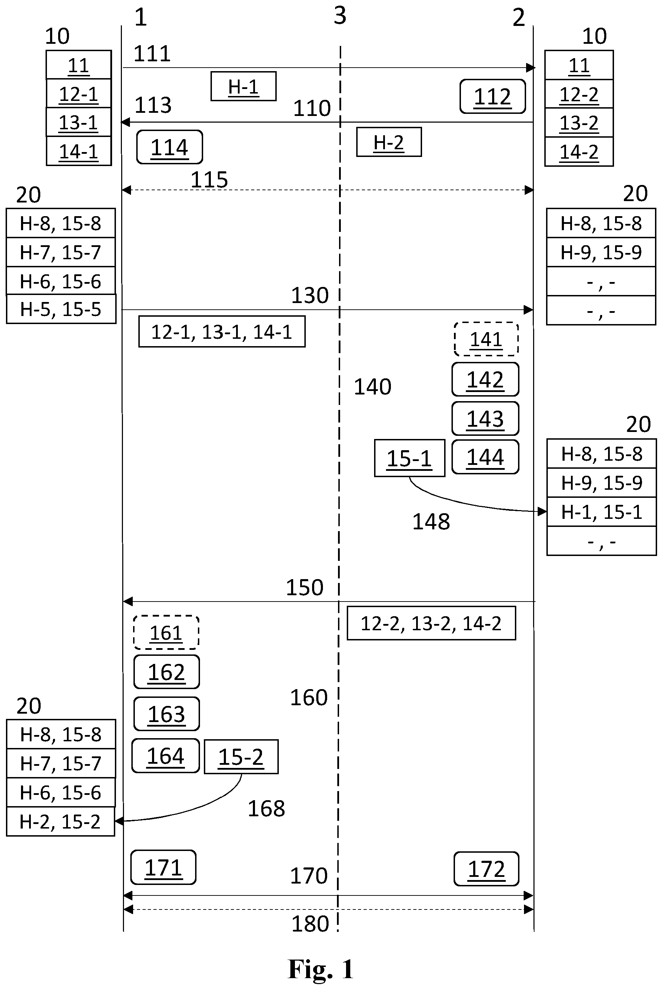

Fig. 1 illustrates a first secure element 1, a second secure element 2 and an optional terminal (or intermediary device) 3. The secure elements 1, 2 and further secure elements (not shown) can perform transactions in a transaction system, e.g. digital money transactions of a digital money system.

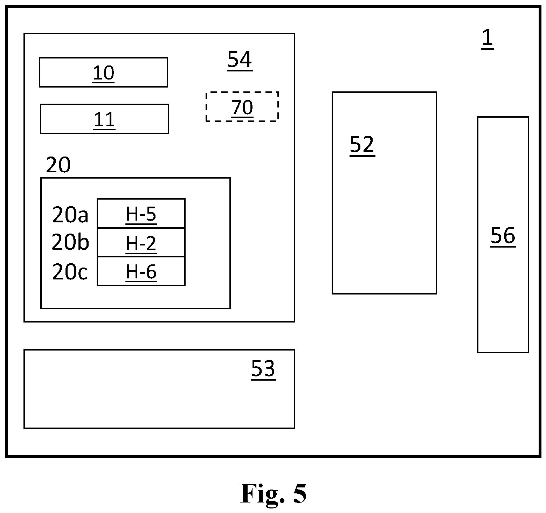

The secure element 1 is illustrated in more detail in Fig. 5. The secure element 1 comprises a communication unit 56, a non-volatile memory 54, a certificate verification unit 53 and a transaction unit 52. Verification data 11, 20 are stored in the non-volatile memory 54, which can be used by the certificate verification unit 53.

The communication unit 56, preferably a terminal communication unit, is configured for receiving at least one certificate 12-2, 13-2 14-2 from a current transaction partner, the secure element 2 in Fig. 1. The certificate verification unit 53 is configured to verify the at least one received certificate 12-2, 13-2, 14-2, which may be a certificate chain, and to provide a verified data element 15-2. The verified data element 15-2 can be a verified participant data element, such as an authentication public key of the transaction participant/partner, e.g. the secure element 2. The verified participant data element 15-2 would be a certified data element of a participant certificate 14-2 of the secure element 2. The verification unit 53 uses verification data 11, 20 stored in the non-volatile memory 54 of the secure element 1 when verifying an at least one received certificate 12-2, 13-2, 14-2. The transaction unit 52 is configured to use the verified data element 15-2 provided by the certificate verification unit 53 in the current transaction of the transaction system.

The verification data 11, 20 stored in the non-volatile memory 54 comprise dynamic verification data 20. The dynamic verification data 20 comprise at least two records 20a, 20b, 20c of previous transactions of the secure element 1 in the transaction system. These records 20a, 20b and 20c in the dynamic verification data 20 respectively comprise a certificate reference H-5, H-2 and H-6 of at least one previous certificate received and verified in a previous transaction of the secure element 1.

For example, certificate reference H-6 of record 20c may be the reference of the certificate of the transaction partner in the last transaction of secure element 1. After the certificate of the transaction partner in the last transaction has been verified, the certificate reference was stored in the dynamic verification data 20. Certificate reference H-5 and H-2 accordingly would have been stored into records 20a, 20b of the dynamic verification data 20 before the last transaction, e.g. in a more previous transaction.

The verification unit 53 may now in a current transaction receive or calculate a current certificate reference, e.g. H-5 oder H-2, and check if the current certificate reference is included in the dynamic verification data 20. If the current certificate reference is included in a record of the dynamic verification data 20, the certificate (or certificate chain) of the current transaction partner has been verified in a previous transaction. Accordingly, the verification unit 53 skips the verification of the certificate (chain)/ provides the verified data element directly without verification of the certificate (chain).

The verification data 11, 20 may further comprise static verification data 11. The non-volatile memory 54 may further comprise at least one certificate 12-1, 13-1, 14-1, which may be a certificate chain 10. A certificate, e.g. participant certificate 14-1, of the secure element 1 includes a certified (participant) data element 15-1. The certificate 14-1 can be accordingly verified by the transaction partner before the certified data element is used as a verified data element by the transaction partner, e.g. secure element 2.

Returning to the example illustrated in Fig. 1, the secure element 1 initially in the dynamic verification data 20 includes four records stored in previous transactions. The records in this example include the certificate reference H-8 to H-5 and the verified data element 15-8 to 15-5 respectively. The (previous) certificate reference is preferably derived from the at least one (previous) certificate, e.g. as a hash value or checksum of the (previous) participant certificate or the (previous) certificate chain.

In the example of Fig. 1 the secure element 2 also comprises dynamic verification data 20, which is optional however. The dynamic verification data 20 of the secure element 2 initially include two records from previous transactions, each including the corresponding previous certificate reference H-8, H-9 and the corresponding previous verified data element 15-8 and 15-9, and two empty records.

The secure element 1 (and secure element 2) comprises a certificate chain 10 for its (their) own certified data element 15-1 (15-2). The certificate chain 10 comprises a common root public key or a common root certificate, which is assumed to be stored in the secure elements 1 (2), particularly stored in their static verification data 11. The certificate chain 10 further comprises a participant certificate 14-1 (14-2) which includes the certified data element 15-1 (15-2) of the secure element 1 (2) and at least one intermediate certificate 12-1, 13-1 (12-2, 13-2). Fig. 1 shows an example with two intermediate certificates in the certificate chain 10.

In a known standard process, not using the present dynamic verification data, the process would immediately start with certificate exchange 130, 150 and certificate verifications 142-144 and 162-164.

Fig. 1 illustrates a first transaction 110-180 of the first secure element 1 with a transaction partner, the secure element 2. In the first transaction 110-180 the secure element 1 receives 113 a certificate reference H-2 of the participant certificate 14-2 or of the certificate chain 11, 12-2, 13-2, 14-2 of the transaction partner, the secure element 2. The secure element 1 may also send 111 its own certificate reference H-1 to the secure element 2.

In step 114 the secure element 1 checks, if a record in the dynamic verification data 20 exists for the received certificate reference H-1. In case a record exists, steps 150 and 162-164 can be skipped in the secure element 1. Hence, reception 150 of the at least one certificate 14-2, 13-2, 12-2 and/or verification of the at least one certificate 14-2, 13-2, 12-2 is not required. The verified data element 15-2 of the dynamic verification data 20 can be used directly. Basically, the same could apply for data element 15-1 after a corresponding check 112 in secure element 2, if certificate reference H-1 would be stored in the dynamic verification data 20 of secure element 2.

In the example of Fig. 1 the certificate reference H-2 (and H-1) however is initially not included in the dynamic verification data 20 of the secure element 1 (and 2). Hence, the certificates have to be exchanged 130, 150 and checked 142-144, 162-164 in the first transaction, at least as far as no record or static verification data exists (e.g. for an intermediate certificate 12-2,13-2).

In an optional step 115 the need to exchange one or more certificates (or not) may be communicated, as far as not previously exchanged e.g. in steps 111 and/or 113. The secure element 1 (2) in step 115 or 111 (113) may request the certificate(s) to be received from the transaction partner, the secure element 2 (1). In the example of Fig. 1, both transaction partners 1, 2 would request the certificates 12-2, 13-2, 14-2 and 12-1, 13-1, 14-1 in one of steps 111, 113 and 115.

A certificate reference checking phase 110 of the transaction 110-180 comprises at least steps 113, 114, typically step 112 and optionally step 115 in the secure element 1.

The secure element 1 receives 150 the at least one certificate 12-2, 13-2, 14-2 of the secure element 2, including the participant certificate 14-2 for a certified participant data element. The received certificates 12-2, 13-2, 14-2 are verified in steps 162, 163 and 164, which basically can be performed in any order. If the certified (participant) data element is verified it forms the verified (participant) data element 15-2.

Optionally, a record for an intermediate certificate 12-2 or 13-2 may exist in the dynamic verification data 20 or even static verification data 11 may exist for an intermediate certificate 12-2, 13-2, e.g. if both secure elements share a common intermediate certificate (12-1 = 12-2). In these cases the corresponding intermediate certificate 12-2, 13-2 would (also) not be verified.

The secure element 1 stores 168 the certificate reference H-2 and the verified data element 15-2, preferably being the certified participant data element of the participant certificate 14-2, in a record of the dynamic verification data 20.

Preferably, the record data element(s) of the current transaction is (are) stored in an empty record or a most unused record of the dynamic verification data 20 (or its subpart) of the current transaction. In step 168 of secure element 1 of Fig. 1 the record of H-5 is overwritten, whereas in corresponding step 148 of secure element 2 an empty record is available for storing the record data elements H-1, 15-1 of secure element 1 of the first/ current transaction.

In step 171 of a usage phase 170 of the first transaction 110-180, the verified data element 15-2 is used in the secure element 1. Accordingly, verified data element 15-1 of secure element 1 would be used in the secure element 2 in step 172 of the transaction phase 170.

In the preferred variants the verified data element 15-2 (15-1) is a public authentication key of the transaction partner 2 (1). Step 171 (172) may be an authentication step and/or a session (or secure channel) key agreement step. The usage phase 170 may include an authentication phase and/or a secure channel creation phase.

The first transaction 110-180 optionally comprises a secure channel phase 180 , in which the secure element 1 receives and/or sends data via a secure channel between the transaction partners 1, 2. The secure channel being created in usage phase 170 based on an authentication public key as the verified data element 15-2 (15-1). Data transmitted via the secure channel preferably cannot be read or changed by third parties (the data are encrypted and/or change-protected), not even by the terminal 3.

In the usage phase 170 or preferably in the secure channel phase 180 digital money is exchanged (send or received). The transaction hence may be a digital money transaction of a digital money transaction system. In particular secure element 1 may send (or receive and store) a monetary value token of the secure element, which may also be stored in the non-volatile memory of the secure element 1. Fig. 5 shows the non-volatile memory of the secure element 1 comprising a monetary value token storage area 70. For example EP 3 671 514 B1, WO 2020/212331 A1, WO 2021/170646 A1, WO 2023/011758 A1 and WO 2023/011761 A1 disclose different aspects of such monetary value token transaction systems.

The secure element 1, 2 may comprise one or more certificate chains 10, e.g. a first certificate chain for a first (authentication) public key and/or a second certificate chain for a second (encryption/other purpose/other role) public key and/or a third certificate chain for an identifier of the secure element 1, 2.

Transactions of the transaction system include multiple phases. Generally, a certificate exchange phase, a certificate verification phase and a usage phase were known phases. The certificate reference checking phase 110 is an additional phase, which particularly may avoid or reduce the certificate verification phase(s) 160 (140) in the secure element 1 (2) and possibly also may avoid or reduce the certificate exchange phase(s) 150 (130) in the secure element 1 (2). The certificate verification phases 160, 140 and possibly also the certificate exchange phases 150, 130 are optional phases of the transaction/may or may not occur depending on the content of the dynamic verification data 20.

Furthermore, the certificate checking phase(s) 160 (140) now comprises the additional step of storing 168 (148) the certificate into a record of the dynamic verification data 20 in the secure element 1 (2). The step of storing 168 (148) occurs in case the certificate reference for the verified data element 15-2 is not stored in a record yet.

The usage phase 170 or the secure channel phase 180 may comprise a digital money exchange, particularly the exchange (send or receive) of a monetary value token.

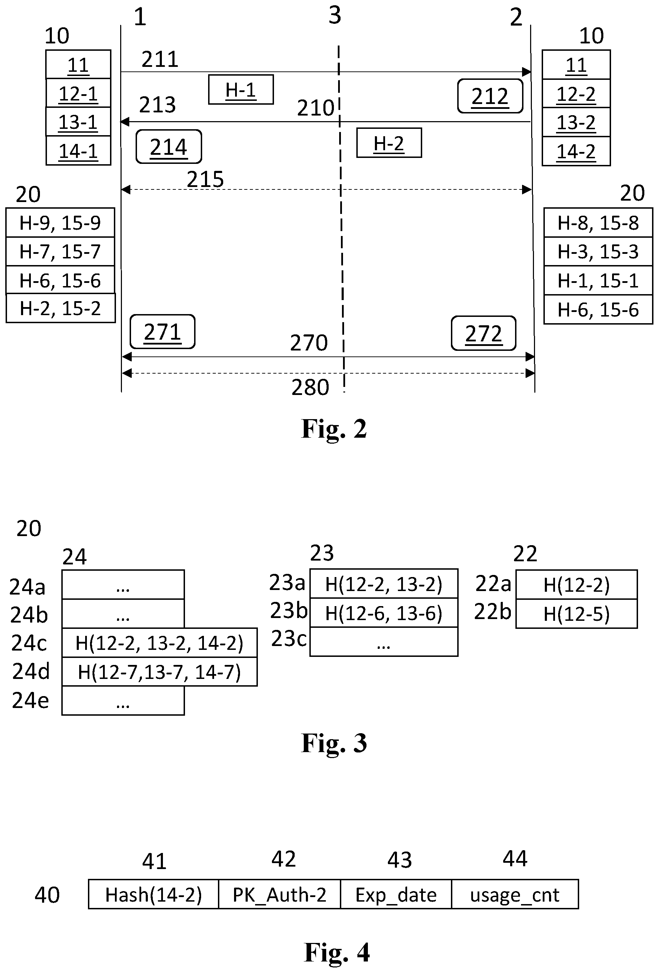

Fig. 2 also illustrates the first secure element 1, the second secure element 2 and an optional, possibly different terminal 3.

In the example of Fig. 2 the dynamic verification data 20 of the secure elements 1, 2 include the certificate reference H-2, H-1 of the current transaction partner. The current transaction 211-280 is referred to as a second transaction of the transaction partners, the secure elements 1, 2.

The current second transaction 211-280 may be the next common transaction or a further common transaction of the secure elements 1, 2, particularly after the first transaction illustrated in Fig. 1.

The dynamic verification data 20 of both secure elements however have changed. One or more further transactions, particularly with other transactions partners, such as secure elements 3-9 (not shown) changed the dynamic verification data 20. For example, secure element 1 in the illustrated example would at least have performed a transaction with secure element 9 (not shown), since the first record changed accordingly (from "H-8, 15-8" in Fig. 1 to "H-9, 15-9" in Fig. 2).

The secure element 1 receives 213 a certificate reference H-2 of the current transaction partner. The certificate reference H-2 may for example be derived from or refer to the participant certificate 14-2 of the transaction partner or be derived from or refer to the certificate chain 10 of the transaction partner.

The secure element 1 checks 214, if the received certificate reference H-2 corresponds to a record in the dynamic verification data 20. Since a record of the dynamic verification data 20 in the example of Fig. 2 stores the received certificate reference H-2, a certificate verification 160 is skipped in the secure element 1.

In the example of Fig. 2 secure element 2 comes to the same result in step 212. Secure element 1 sends its certificate reference H-1 in step 211 and secure element 2 finds a record in its dynamic verification data 20 for the received certificate reference H-1 in step 212. Hence, it also skips certification verification for the certificate or certificate chain of the received certificate reference H-1.

It should be noted that multiple certificate references may be received 213 (211) and/or checked 214 (212) in the secure element 1 (2), e.g. one certificate reference per certificate (11), 12-2, 13-2, 14-2 in a certificate chain 10.

In an optional step 215 (or in step 211 (after step 214)) the secure element 1 may inform the transaction partner that the certificate (chain) of the certificate reference is not required or may simply not request the certificate (chain).

The record in the dynamic verification data 20 of the secure element 1 (2) includes the verified data element 15-2 (15-1) such that certificate transmission 150 (130) (or a separate transmission of the verified data element 15-2 (15-1)) also can be skipped. Alternatively the verified data element 15-2 or the certificate thereof may be transmitted in one of steps 211-215.

The secure element 1 (2) in step 214 (212) has found a record of a previous transaction in the dynamic verification data 20 for the current transaction partner. It may thus directly use the verified data element 15-2 (15-1) in a step 271 (272) of the current transaction such as an authentication step or secure channel establishment step.

In the example of Fig. 2 both secure elements 1, 2 of the second transaction skip both phases 130, 150 and 140, 160 of a second transaction.

It should be noted that a number of records in the dynamic verification data 20 is preferably predetermined and/or at least limited to a predetermined number of records. The predetermined number will typically be above three but below 25. It may be further noted that the record size of a record of the dynamic verification data 20 is significantly smaller than the size of the certificate. Particularly, the record size can be less than 33% of the certificate size or even less than 20% of the certificate size.

Some further variations (and/or cases) shall now be shortly discussed, which may not have been indicated or described in detail in Fig. 1 or Fig. 2. The variations and/or cases can be combined with each other and/or with the aspects indicated in Fig. 1, 2 or in the further figures.

In some cases, secure elements, such as secure element 1 and secure element 5 (not shown), of a previous common transaction, may come to different results in the step of checking 112, 212, 114, 214 in a current common transaction. This can be illustrated by the record of secure element 1 in Fig. 1 initially including certificate reference H-5. A certificate reference H-1 of the secure element 1 may still be stored in a record of the dynamic verification data 20 of the previous transaction partner, secure element 5. The secure element 1 may however not find a record for the certificate reference H-5 of the previous transaction partner anymore. The record has been re-used/overwritten. Accordingly, only secure element 1 would request and check the at least one certificate of the transaction partner.

In a first variation, as partly indicated above, only one of the secure elements comprises dynamic verification data.

In a second variation, as partly indicated above, the dynamic verification data 20 may also or alternatively comprise records for intermediate (first or second) level certificates. This aspect will also be discussed in more detail below with respect to Fig. 3. Hence, cases may occur (or may be the standard) in which the participant certificate 14-2 has to be checked and received, but the intermediate (first and/or second) level certificate 13-2, 12-2 does not have to be checked and/or received. In step 113, 213 (and 111, 211) for example either only the certificate reference of the intermediate level certificate is received or separate certificate references for the certificates of the different levels are received. More specifically, only a certificate reference for the (first or second) intermediate level certificate 12-2, 12-3 may be received or two or three separate certificate references for certificates of the different levels may be received (e.g.: separately for certificates 12-2, 13-2 and 14-2 or for certificates 12-2 and 13-2 or for certificates 13-2 and 14-2).

In a third variation the certificate reference may be different. The certificate reference may not be a derived certificate reference, such as a has value, which is derived from a certificate (chain). A certificate data element could be used as the certificate reference. For example, a certificate number or the certified data element may be used as the certificate reference.

In a fourth variation, the data elements of the records may be different. As indicated in Fig. 5, the records of the dynamic verification data 20 may also only comprise (consist of) a certificate reference. The certificate 14-2 or the verified data element 15-2 may than be received, but the checking step(s) 164 (163, 162) could be skipped. If the verified data element 15-2 forms the certificate reference, even certificate reception (or data element reception) still would not be required. Further alternatives for the record/the record data elements will be discussed with respect to Fig. 4.

In a fifth variation the advantageous reception 213 (or sending 211) of only certificate references may be avoided. A certificate, preferably the participant certificate or the intermediate certificate is transmitted in steps 211 or 213. The certificate reference H-2 (H-1) than could be derived from or extracted from the received certificate in the secure element 1 (2).

Fig. 3 illustrates a dynamic verification data 20, which optionally comprises one, two or three separate level specific areas 22-24 or a common area for records of different levels.

It has already been indicated above that the dynamic verification data 20 may comprise records 24a-24e of participant certificates and/or records 23a-23c of second level intermediate certificates and/or records 22a-22cb of first level intermediate certificates. In first variants only certificates of one certificate level are stored in the dynamic verification data 20. In second variants certificates two or three certificate levels are stored in the in the dynamic verification data 20. Preferably, records for participant certificates and records for second level intermediate certificates are provided.

In the records of Fig. 3 a derived certificate reference is illustrated, particularly a Hash over the certificate(s). A participant certificate reference may thus be the hash value over three certificates: H(12-2, 13-2, 14-2). A second level certificate reference may thus be the hash value over two certificates: H(12-2, 13-2). A first level certificate reference may thus be the hash value over the intermediate level certificate: H(12-2). Of course, another certificate reference coding may be used, e.g. as mentioned above - particularly e.g. by including the root 11 into the hash (H(11, 12-2,13-2, 14-2)) or by using only one certificate (H(14-2) or H(13-2)) or by using the certified data element (15-2 or the public verification key).

The records 22a to 24e may comprise further record data elements although only the certificate reference is shown in Fig. 3. Preferably, a certificate reference is used as the only record data element.

In Fig. 3 three separate areas 22-24 are indicated a participant area 22 (for records 24a-24e of participants certificates), a second level area 23 (for records 23a-23c of second level intermediate certificates) and a first level area 22 (for records 22a-22b of first level intermediate certificates). A predetermined combination of these areas 22-24 may exist, e.g. 22, 23, 24 or 22, 23 or 23, 24 in secure elements of the transaction system.

Particularly in case of a common area for records of certificates of different certificate levels, the record may comprise a level indicator, e.g. 3 = participant, 2 = second intermediate level or 1 = first intermediate level.

The number of records in the dynamic verification data 20 and/or in the two or more level specific areas 22-24, may be predetermined. The number of records is preferably determined during personalization and/or production of the secure element. The dynamic verification data 20 preferably comprises less than 25 and/or more than 3 records. The dynamic verification data 20 preferably comprises less than 20 and/or more than 3 records for participant certificates, e.g. in the participant area 24. Furthermore or alternatively, the dynamic verification data 20 may comprise less than 12 and/or more than 2 records for second level intermediate level certificates, e.g. in the participant area 23. Furthermore or alternatively, the dynamic verification data 20 may comprise less than 6 and/or more than one record for first level intermediate level certificates, e.g. in the participant area 22.

Typically, the secure element 1, 2 will receive its own data - particularly including one or more certificate chains 10, the certified secure element keys and/or secure element identifier - prior to issuance of the secure element to a user, e.g. during personalization and/or production of the secure element. Optionally, such individual secure element data may be remotely personalized or updated (post-issuance).

In a self-checking phase, the secure element 1,2 may check its own certificate chain(s) 10. The self-checking phase may be performed during personalization and/or production of the secure element (pre-issuance) and/or after a remote personalization or update (post-issuance). The dynamic verification data 20 may comprise a certificate reference/record for a root or intermediary level certificate verified during the self-checking phase. The self-checking phase is preferably performed automatically, before an initial use of the one or more certificate chains 10 (e.g. in a first transaction 110-180). The self-checking phase can be for example automatically triggered at the end of the personalization of the secure element or upon initial selection of the application in the secure element 1, 2 ("Select" command received).

Fig. 4 illustrates possible record data elements 41 to 44 of a record 40 of the dynamic verification data.

The certificate reference 41 in the record has been discussed above and is illustrated to be a derived certificate reference (Hash(14-2)) for the corresponding certificate (14-2).

A second record element 42 of the record 40 optionally may include the verified data element. This example already has been discussed with regard to Fig. 1 and Fig. 2. The record element 42 in Fig. 4 includes the public authentication key of secure element 2 (PK_Auth-2).

Record expiration date 43 and record usage counter 44 are further optional data elements of the record 40, wherein one or both may exist in the record 40.

The expiration date 43 in a first variant represents a record expiration date. The record expiration date may be set upon storing the record. It could be set to the current date plus x weeks or y months, wherein e.g. x could be between 2 and 8 and y e.g. between 1 and 3. If a record is expired (date > expiration date) it can for example be deleted/assumed to be empty/reused. Preferably, the expiration date is updated upon use of the record/the certificate of the record in a current transaction. For example, v weeks or w months could be added to the expiration date upon each use of the record. The updated expiration date would enable the secure element to sort the records by use, e.g. unused records and frequently used records, or to find unused records.

The expiration date 43 in a second variant represents a certificate expiration date. The certificate expiration date may be a certificate data element of the certificate of the record.

The record usage counter 44 would be an alternative way to determine a usage of the records (usage of the certificate of the record in transactions). The usage counter of a certificate may be increased (preferably by 1) each time its certificate is used in a current transaction. In addition all usage counters may be decreased regularly (e.g. after a predetermined number of transactions (preferably decreased by 1)).

The usage of a record would be the preferred criteria in order to determine which record in the dynamic verification date 20 or in the level specific area 22, 23, 24 should be used for storing the certificate reference of the current certificate in the current transaction.

### REFERENCE SIGNS

- 1, 2: secure element
- 3: terminal
- 10: certificate chain
- 11: root certificate
- 12-1, 12-2: intermediate level 1 certificate
- 13-1, 13-2: intermediate level 2 certificate
- 14-1, 14-2: participant certificate
- 15-1 - 15-9: verified data element
- H-1 - H-9: hash value of certificate
- 20: dynamic verification data

- 111, 211: send hash to transaction partner
- 113, 213: receive hash from transaction partner
- 112, 114, 212, 214: check dynamic verification data
- 115: request certificate
- 148, 168: store dynamic verification data record

- 130, 150: exchange certificates
- 140, 160: certificate verification
- 141-144, 161-164: check certificate
- 170, 270: authentication
- 171, 172, 271, 272: verified data element usage
- 180, 280: exchange digital money

- 22: level 1 verification data
- 23: level 2 verification data
- 24: participant verification data
- 22a, 22b: level 1 record
- 23a - 23c: level 2 record
- 24a - 24e: participant record

- 40: verification data record
- 41: certificate reference
- 42: verified data element
- 43: record expiration date
- 44: record usage counter
- 52: transaction unit
- 53: certificate verification unit
- 54: non-volatile memory
- 56: communication unit
- 70: digital money storage area

## Claims

1. A secure element (1) of a transaction system comprising multiple transaction partners, the secure element (1) comprising:
- a communication unit (56) configured for receiving at least one certificate from a current transaction partner;
- a certificate verification unit (53) configured to verify the at least one received certificate (12-2, 13-2, 14-2) and to provide a verified data element (15-2), wherein the verification unit (53) uses verification data (11, 20) stored in a non-volatile memory (54) of the secure element (1);
- a transaction unit (52) using the verified data element (15-2) provided by the certificate verification unit (53) in a current transaction of the transaction system;
**characterized in that**
the verification data (11, 20) stored in the non-volatile memory (54) comprise dynamic verification data (20);
the dynamic verification data (20) comprise at least two records (22a-22c) of previous transactions of the secure element (1) in the transaction system; and
the records (22a-22c) in the dynamic verification data (20) stored in the non-volatile memory (54) respectively comprise a certificate reference (H-2, H-5) of at least one previous certificate received and verified in a previous transaction.

2. The secure element (1) of claim 1, **characterized in that** the certificate verification unit (53) is configured to check, if the certificate reference (H-2) of a certificate from a current transaction corresponds to a certificate reference (H-2, H-5) from a previous transaction stored in the dynamic verification data (20).

3. The secure element (1) of one of the preceding claims, **characterized in that**
the certificate reference (H-2) is a derived reference, such as a hash value or a checksum, of the at least one current certificate (14-2), and/or
a current certificate reference (H-2) is received from a current transaction partner (2), particularly prior to or instead of receiving the at least one current certificate (12-2, 13-2, 14-2).

4. The secure element (1) of one of the preceding claims, **characterized in that**
a record size of the records (22a-22c) in the dynamic verification data (20) is smaller than 60%, preferably smaller than 50%, of a certificate size of the previous certificate; and/or
a reference size of the certificate reference (H-2, H-5) is smaller than 50%, preferably smaller than 33%, of a data element size of the verified data element (15-2)

5. The secure element (1) of one of the preceding claims, **characterized in that**
the at least one received certificate (12-2, 13-2, 14-2) includes a transaction partner certificate (14-2) of the transaction partner (2) for the verified data element (15-2) and preferably one or more intermediate certificates (12-2; 13-2); and/or
the at least one previous certificate (12-5, 13-5, 14-5) is a previous transaction partner certificate (14-5) or a previous intermediate certificate (12-5; 13-5), preferably a previous first level intermediate certificate (12-5) or a previous second level intermediate certificate (13-5).

6. The secure element (1) of one of the preceding claims, **characterized in that** the record (22a, 23a, 24a) in the dynamic verification data (20) comprises the verified data element (15-2) of the previous transaction, preferably either further to the certificate reference (H-2) or as the certificate reference.

7. The secure element (1) of one of the preceding claims, **characterized in that** the records (40) in the dynamic verification data (20) respectively comprise
a record usage counter (44), preferably as a relative usage counter; and/or a record expiration date (43).

8. The secure element (1) of one of the preceding claims, **characterized in that** the certificate verification unit (53) is configured to store (148) at least the certificate reference (H-2) of the certificate (14-2) of the verified data element (15-2) in the dynamic verification data (20), preferably into an empty record (22a) or into a most unused record (22a).

9. The secure element (1) of one of the preceding claims, **characterized in that**
the dynamic verification data (20) comprises two or more verification data record areas (22, 23,24) each being assigned to a given certificate level, or
the record (22a-24e) in the dynamic verification data (20) further comprises a certificate level indicator;
wherein preferably the certificate level is a level of the certificate in a certificate chain and/or indicates one of the following: transaction partner certificate, second level intermediate certificate or first level intermediate certificate.

10. The secure element (1) of one of the preceding claims, **characterized in that** the verification data (11, 20) comprises static verification data (11), preferably a first root certificate and/or a first root public key;
wherein the static verification data (11) particularly comprises
- current generation static verification data, preferably current generation root verification data, and
- future generation static verification data, preferably future generation static root verification data.

11. The secure element (1) of one of the preceding claims, **characterized in that** the certificate verification unit (53) skips a certificate verification, if a record exists in the dynamic verification data (20) and performs a certificate verification, if no record exists.

12. The secure element (1) of one of the preceding claims, **characterized in that**
- the verified data element (15-2) is a cryptographic key and/or a unique identifier; and/or
- the certificate (14-2) comprises a certification signature and /or a certificate verification key and/or the verified data element (15-2); and/or .
- the transaction is a digital money transaction, particularly a CBDC transaction and/or a monetary value token transaction, the secure element (1) preferably storing one or more monetary value tokens,
- the communication unit (54) is a terminal communication unit.

13. The secure element (1) of one of the preceding claims, **characterized in that** the secure element (1) is configured to generate a command for the transaction partner, the command for the transaction partner being preferably send to a terminal (3) in a command response of the secure element (1) for a command received by the terminal (3).

14. A transaction system comprising multiple secure elements according to one of claims 1 to 13, preferably further comprising
two or more participant certificate issuing units issuing participant certificates (14-1); and/or
two or more, in particular first and/or second level, intermediate certificate issuing units issuing.

15. The transaction system according to claim 14, the transaction system being a digital money transaction system, preferably a monetary value token system, particularly further comprising a monetary value token register and/or a monetary value token issuer unit.
